Europäisches Patentamt

European Patent Office

Office européen des brevets

(19)

(11) Publication number: 0 349 156
A1

# EUROPEAN PATENT APPLICATION

(21) Application number: 89306030.1

(22) Date of filing: 14.06.89

(51) Int. Cl.⁴: H01M 2/06 , H01M 6/08

(30) Priority: 25.06.88 GB 8815181

(43) Date of publication of application:
03.01.90 Bulletin 90/01

(84) Designated Contracting States:
DE FR GB

(71) Applicant: TUCKER FASTENERS LIMITED
Walsall Road
Birmingham B42 1BP(GB)

(84) GB

Applicant: EMHART INDUSTRIES, INC.
426 Colt Highway
Farmington Connecticut 06032(US)

(84) DE FR

(72) Inventor: Smith, Daniel Robin
82 Hollyfield Road
Sutton Coldfield West Midlands B75 7SH(GB)

(74) Representative: Wetters, Basil David Peter et
al
Emhart Patents Department Lyn House 39
The Parade
Oadby, Leicester LE2 5BB(GB)

(54) Electrical storage cell.

(57) An electrical storage cell, having a headed current collector pin (7) protruding through a sealing grommet (12) at one end of the cell, has a short threaded portion (18) in the stem (8) of the collector pin adjacent the head (9) which increases the bite on the grommet of the stem of the collector pin passing through said grommet. The thread may be interrupted. The sealing of the stem of the collector pin in the grommet may be enhanced by the provision of a small, flexible upstand (20) formed in the grommet which is distorted and deflected inwardly on assembly to form an additional seal against the stem. The axial force required to remove a collector pin is greatly increased. A weak point may be provided so that the stem fractures before it can be extracted, the major proportion of the stem being left in the cell when the head is thus torn from the collector pin; the broken stem left in the cell provides a significant seal against leakage of the contents of the cell.

Fig-2

## ELECTRICAL STORAGE CELL

The present invention relates to an electrical storage cell having a current collector pin protruding through a grommet at one end of the cell. The grommet seals the cell and is itself sealed where the stem of the collector pin penetrates the grommet. The collector pin carries a head on its stem and sealing is assisted by a thickened portion of the item adjacent the head and by the inner face of the head which sets against the external face of the grommet. A thin, flexible skirt is usually provided on the face of the grommet to assist the seal between the grommet and the storage cell.

The stem of the collector pin is an interference fit in the grommet and it is an object of the present invention to provide an electrical storage cell which requires a greatly increased axial force to remove the collector pin.

It is a further object of the present invention to improve the sealing of an electrical storage cell having a protruding collector pin.

According to the present invention an electrical storage cell sealed by a current collector pin comprising a stem having a head at one end, the collector pin protruding through a sealing grommet at one end and forming an annular seal between the inner face of the head against the external face of the grommet is characterised in that a short, threaded portion having at least one thread turn is provided in the stem of the collector pin adjacent the head.

Preferably the threaded portion of the stem is slightly thicker than the rest of the stem and may be provided with a roughened surface. The thread may be interrupted in form and serves to increase the resistance of the collector pin to an axial force applied to remove it from the storage cell.

As an additional safety factor, a weakness can be incorporated in the thickened portion of the stem which will fracture by the application of a force less than that required to withdraw the collector pin. Consequently, the head and part only of the thickened portion of the stem will be removed, leaving part of the thickened portion of the stem still in the storage cell, together with the rest of the stem and thus preventing leakage of the cell contents which would result from the removal of the collector pin. Preferably, the weak point is provided in the thickened portion of the stem between the thread and the head, thus ensuring that the stem which is left in the storage cell when the head is pulled off can provide an adequate seal in the grommet.

To assist the seal of the collector pin where it penetrates the grommet, a small flexible upstand may be formed in the grommet which is deflected inwardly on assembly to form an additional seal against the stem of the collector pin when it is located in the storage cell.

In order that the present invention be better understood, a preferred embodiment will now be described in greater detail by way of example with reference to the accompanying drawings in which:-

Figure 1 is a section of a typical electrical storage cell presently in use,

Figure 2 is a section of an improved electrical storage cell according to the present invention, and

Figure 3 is a section of an alternative collector pin for use in an electrical storage cell according to the invention.

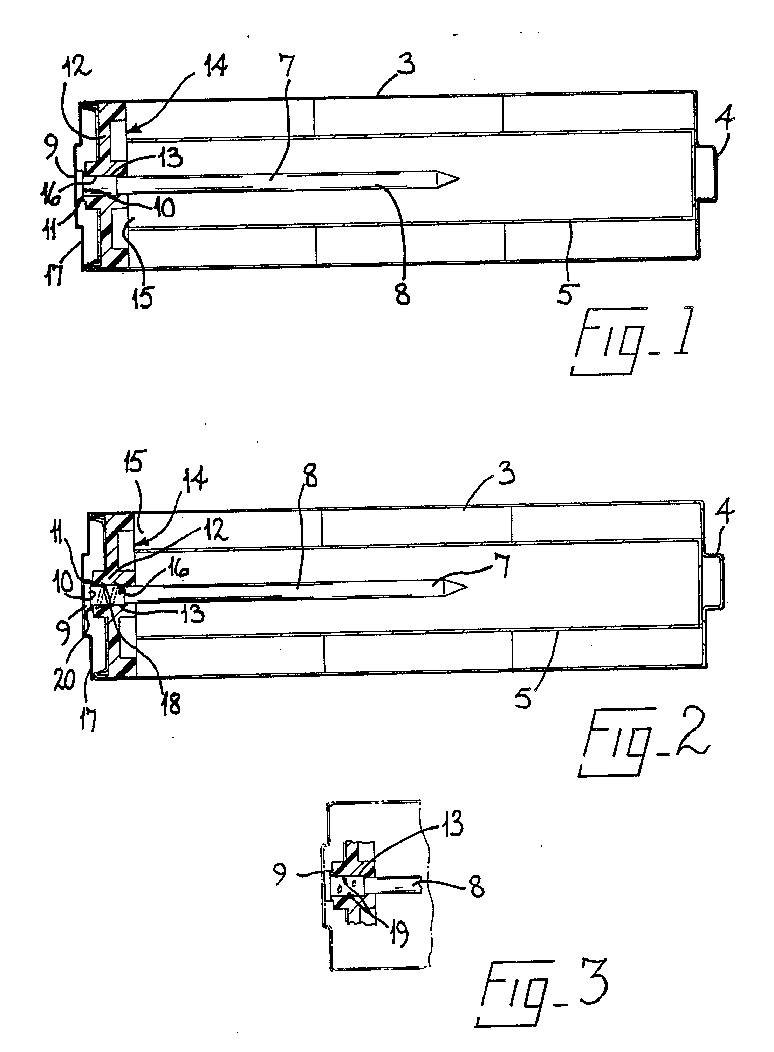

The cell (Figures 1 and 2) has metal outer casing 3 formed with a contact portion 4 at one end and contains a separator 5. The other end of the casing is sealed by a grommet assembly 6 which carries a brass (Cu/Zn) alloy collector pin 7. The collector pin 7 has a stem 8 located along the axis of the casing 3, the stem 8 having a brass, flat-faced head 9 at one end which is assembled in the storage cell so that the inner face 10 of head 9 forms an annular seal against external face 11 of grommet 12 which is made of talc-filled polypropylene.

A thickened portion 13 of stem 8 adjacent head 9 extends for the major thickness of grommet 12. A thin membrane 14 is located between end 15 of casing 3 sealed by grommet assembly 6 and the external face 16 of grommet 12. During assembly stem 8 is pressed into casing 3 so that membrane 14 is ruptured. The edges of the ruptured hole in membrane 14 are thereby forced against the stem 8 adjacent grommet 12. Grommet assembly 6 is capped by cover plate 17 which is spot-welded to the outer face of head 9.

The improved electrical storage cell illustrated in Figure 2 carries a $1\frac{1}{2}$ turn buttress thread 18 formed on thickened portion 13 of stem 8 and the surface of thickened portion 13 is provided with a rough surface finish. Head 9 is elliptical or provided with 'flats' to facilitate rotation of the collector pin during assembly.

The collector pin illustrated by Figure 2 may alternatively be replaced by the collector pin illustrated by Figure 3 where buttress thread 18 formed on thickened portion 13 of stem 8 is replaced by an interrupted thread 19.

A small flexible upstand 20 is formed in the upper face of grommet 12 which on assembly tends to be forced against thickened portion 13 of stem 8 in hole 16 penetrating grommet 12. This improves both the sealing of the casing 3 by grommet assembly 6 and also increases the resistance of collector pin 7 to removal from the casing 3 by the application of an axial force.

During assembly of an improved electrical storage cell according to the present invention, the collector pin 7 is driven through the grommet 12 into casing 3 with rotation provided by gripping head 9 so that the thread 18 enhances the interference fit of thickened portion 13 of stem 8 where it penetrates grommet 12. The extra bite of the thread on thickened portion 13 of stem 8 also assists the distortion of upstand 20 so that it is deflected and forced into hole 16 in grommet 12 to form an enhanced seal against stem 8.

An axial force of 30N is sufficient to extract the collector pin from the casing of the presently-used electrical storage cell of Figure 1 thereby facilitating undesirable leakage of the cell contents. A desirable safety standard would be satisfied by a collector pin resisting removal by a force of at least 50N.

The collector pin of the electrical storage cell illustrated by Figure 2 requires the application of an axial force of 80N before it is removed from the casing. The effectiveness of the sealing of the casing by the grommet assembly is also improved.

## Claims

1. An electrical storage cell sealed by a current collector pin (7) comprising a stem (8) having a head (9) at one end, the collector pin protruding through a sealing grommet (6) at one end and forming an annular seal between the inner face (10) of the head (9) against the external face (16) of the grommet (6) is characterised in that a short, threaded portion (18/13) having at least one thread turn is provided in the stem (8) of the collector pin (7) adjacent the head (9).

2. An electrical storage cell according to claim 1, wherein the threaded portion (13/18) of the stem (8) of the collector pin (7) is thicker than the rest of the stem.

3. An electrical storage cell according to claim 1 or 2, wherein the threaded portion (13/18) of the stem (8) of the collector pin (7) has a roughened surface.

4. An electrical storage cell according to any one of claims 1 to 3, wherein the threaded portion (13/18) of the stem (8) of the collector pin (7) is formed as a buttress thread (18).

5. An electrical storage cell according to any one of claims 1 to 3, wherein the threaded portion (13/18) of the stem (8) of the collector pin (7) is formed as an interrupted thread (19).

6. An electrical storage cell according to any one of the preceding claims, wherein a small, flexible upstand (20) is formed in the grommet (12) which is deflected inwardly on assembly to form an additional seal against the stem (8) of the collector pin (7) when it is located in the storage cell.

7. An electrical cell according to any one of the preceding claims wherein a weakness is incorporated in the thickened portion of the stem which will fracture by the application of a force less than that required to withdraw the collector pin.

8. An electrical cell according to claim 7, wherein a weak point is provided in the thickened portion of the stem between the thread and the head.

Fig_1

Fig_2

Fig_3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 171 552 (DURACELL INTERNATIONAL INC.)<br>* Claims 1,6,8,13-15,17; page 2, lines 56-86; page 3, lines 14-339; figures 1,3 * | 1,2,7,8 | H 01 M   2/06<br>H 01 M   6/08 |
| Y | --- | 6 | |
| X | FR-A-2 296 274 (F.K. NABIULLIN)<br>* Figure 2; page 7, lines 1-8 * | 1 | |
| Y | --- | 6 | |
| A | FR-E-  91 355 (SAFT)<br>* Figure 1; page 2, left-hand column, lines 31-37 * | 1,3 | |
| A | FR-A-2 089 487 (P.R. MALLORY & CO.)<br>--- | | |
| A | DE-C- 876 853 (ACCUMULATORENFABRIEK SONNENSCHEIN)<br>* Claim 3 * | 3 | |
| | --- | | TECHNICAL FIELDS SEARCHED (Int. Cl.4) |
| Y | DE-U-8 716 389 (VARTA)<br>* Figure; claim 4 *<br>----- | 6 | H 01 M |

The present search report has been drawn up for all claims

| Place of search | Date of completion of the search | Examiner |
|---|---|---|
| THE HAGUE | 11-08-1989 | D'HONDT J.W. |